# EUROPÄISCHE PATENTSCHRIFT

(11) **EP 2 958 870 B1**
(45) Veröffentlichungstag und Bekanntmachung des Hinweises auf die Patenterteilung: **05.04.2017**
(21) Anmeldenummer: 13783500.5
(22) Anmeldetag: 10.10.2013
(51) Int. Cl.: C03C 17/00, C03C 17/34, C08J 7/04

(54) **SCHEIBENANORDNUNG MIT INFRAROTDÄMPFENDER BESCHICHTUNG**
PLATE ASSEMBLY WITH INFRARED DAMPING COATING
AGENCEMENT DE DISQUE AVEC REVÊTEMENT À ATTÉNUATION DES INFRAROUGES

(30) Priorität: 25.02.2013 US 201361768994 P
(43) Veröffentlichungstag der Anmeldung: 30.12.2015
(73) Patentinhaber: Saint-Gobain Glass France, 92400 Courbevoie (FR)
(72) Erfinder: SCHMIDT, Sebastian, 70176 Stuttgart (DE); LAI, Choung, Acton, Massachusetts 01720 (US); MAHFOUD-FAMILIA, Aziz, Shrewsbury, Massachusetts 01545 (US); MASSAULT, Laetitia, F-60280 Margny lès Compiègne (FR)
(74) Vertreter: Gebauer, Dieter Edmund
(86) Internationale Anmeldenummer: PCT/EP2013/071137
(87) Internationale Veröffentlichungsnummer: WO 2014/127857

(56) Entgegenhaltungen:
- EP-A1- 1 008 564
- EP-A1- 1 529 632
- EP-A1- 2 009 057
- WO-A1-03/078162
- WO-A1-2011/032915
- JP-A- 2000 096 034
- JP-A- 2002 194 291
- JP-A- 2005 047 179
- JP-A- 2012 102 266
- US-A1- 2004 131 845
- US-A1- 2009 291 295
- US-A1- 2011 272 647

## Beschreibung

Die Erfindung betrifft eine Scheibenanordnung mit infrarotdämpfender Beschichtung, ein Verfahren zu deren Herstellung und deren Verwendung.

Im Automobilbau besteht ein Trend hin zu größer werdenden Glasflächen, die einen ästhetisch ansprechenden Eindruck ergeben und einen ausreichenden Tageslichteinfall gewähren. Besonders Kraftfahrzeuge mit Sonnendächern erfreuen sich jedoch einer immer größeren Beliebtheit. Der Infrarotanteil des Sonnenlichts bewirkt jedoch vor allem im Sommer eine starke Erwärmung des Fahrzeuginnenraums, wobei sich Scheiben mit großer Einstrahlfläche als nachteilig erweisen. Dabei spielt neben dem sichtbaren Bereich des elektromagnetischen Spektrums von 380 nm bis 780 nm vor allem der Bereich des nahen Infarots (NIR) zwischen 780 nm und 2500 nm eine große Rolle. Neben einem erhöhten Energieverbrauch der Klimaanlage wirkt sich eine Erwärmung auch nachteilig auf das Wohlbefinden der Fahrzeuginsassen sowie die Konzentrationsfähigkeit des Fahrers aus. Um derartige Beeinträchtigungen zu vermeiden wurden Sonnendächer bisher meist aus Mineralglas gefertigt, da dieses Material nur eine geringe Transmission im NIR-Bereich des Lichtspektrums aufweist. Aufgrund der steigenden Energiepreise rückt der Kraftstoffverbrauch von Fahrzeugen immer mehr in den Fokus der Verbraucher, wodurch auch seitens der Automobilindustrie eine Entwicklung hin zu kraftstoffsparenden Modellen zu beobachten ist. Dabei ist vor allem eine Gewichtsreduktion der Fahrzeuge das Mittel der Wahl. Im Hinblick auf Fahrzeugverscheibungen wird diese Gewichtsreduktion vor allem durch die Verwendung von Kunststoffmaterialien realisiert. Häufig verwendete thermoplastische Kunststoffe wie Polycarbonate oder Polymethylmethacrylate zeigen jedoch eine hohe Transmission für IR-Strahlung, was zu einer sehr starken Aufheizung des Fahrgastinnenraums durch Sonneneinstrahlung führt. Dieser Effekt kann durch Verdunklungsvorrichtungen abgemildert werden, wie beispielsweise in EP 2394832 A1 offenbart, wobei es sich jedoch als effektiver erwiesen hat bereits das Eindringen der Infrarotstrahlung durch die Scheibe zu verhindern. Dazu können infrarotabsorbierende Substanzen auf die verschiedenste Art und Weise in die Scheibe integriert werden.

Infrarotabsorbierende Substanzen können beispielsweise direkt in den polymeren Grundkörper der Scheibe integriert werden. In Kombination mit den gängigen thermoplastischen Kunststoffen werden vor allem Indiumzinnoxid, Antimonzinnoxid, Wolframverbindungen, sowie die verschiedensten Metallhexaboride, bevorzugt Lanthanhexaborid, als IR-Strahlung absorbierende Substanzen verwendet, die bereits beim Extrusionsvorgang in die Polymermasse eingebracht werden. Derartige Polymerzusammensetzungen mit IR-absorbierenden Zusätzen sind beispielsweise in EP 1 865 027 A1, DE 100 06 28 A1 und EP 1 559 743 A1 beschrieben.

Des Weiteren sind auch Verfahren bekannt um IR-absorbierende Substanzen in Form einer Beschichtung auf die Oberfläche des polymeren Werkstücks aufzubringen. Dabei wird beispielsweise ein Infrarotstrahlung absorbierender Zusatz gemeinsam mit einem polymeren Dispergiermittel in einem Lösungsmittel auf die Oberfläche der Scheibe aufgetragen und das Lösungsmittel anschließend durch Trocknen entfernt. Eine Indiumzinnoxid-haltige Beschichtung ist beispielsweise aus US 5,518,810 offenbart, während US 7,238,418 B2 den Einsatz von Hexaboridnanopartikeln in derartigen Beschichtungen beschreibt.

Besonders vorteilhaft ist die Kombination mehrerer Substanzen, die in verschiedenen Bereichen absorbieren und so den Wellenlängenbereich des Infrarotspektrums von 700 nm bis 2500 nm möglichst vollständig abdecken. Bisher bekannte Kombinationen zweier IR-Absorber wie beispielsweise Antimonzinnoxid und Lanthanhexaborid in einer Lackschicht führen jedoch zu einer erhöhten Trübung der Scheibe. In US 2009/0291295 wird aus diesem Grund die Kombination einer antimonzinnoxid-haltigen Beschichtung mit einer Lanthanhexaborid-Beschichtung vorgeschlagen.

Viele gängige IR-Absorber wie Indiumzinnoxid und Antimonzinnoxid, insbesondere Indiumzinnoxid, zerfallen jedoch unter Einfluss von UV-Strahlung, wodurch die infrarotdämpfenden Eigenschaften der Verglasung im Laufe der Zeit verloren gehen.

Eine Beschichtung der Scheibe ist auch im Hinblick auf die Widerstandsfähigkeit der Oberfläche, beispielsweise gegen mechanische Beschädigungen, von Vorteil. Solche Schutzbeschichtungen sind insbesondere für Fahrzeugverscheibungen notwendig, da diese starken Beanspruchungen durch Umwelteinflüsse ausgesetzt sind und gleichzeitig hohen Qualitätsanforderungen etwa hinsichtlich der Oberflächenbeschaffenheit und Transparenz genügen müssen. Um eine optimale Haftung der Lackierung auf der Oberfläche eines zu beschichtenden Werkstücks zu gewährleisten erfolgt die Auftragung eines permanent haftenden Lackes bevorzugt in einem zweistufigen Prozess. In einem ersten Schritt wird ein Primer aufgetragen, welcher eine chemische oder physikalische Bindung zwischen dem polymeren Werkstück und dem Decklack herstellt. Nach dem Auftragen und Aushärten des Primers kann die Funktionsschicht aufgetragen werden. Die Funktionsschicht und der Primer können neben farbgebenden Verbindungen und Pigmenten auch Komponenten zur Erhöhung der Kratzfestigkeit, beispielsweise Nanopartikel enthalten. Auf den Primer wird als Funktionsschicht meist ein als Hardcoat bezeichneter kratzfester Lack aufgetragen.

Aufgabe der Erfindung ist es eine im Hinblick auf den Stand der Technik verbesserte Scheibenanordnung mit infrarotdämpfender Beschichtung bereitzustellen, die sowohl den Anforderungen bezüglich der Kratzfestigkeit der Beschichtung genügt als auch ihre infrarotdämpfenden Eigenschaften über eine hohe Lebensdauer hinweg aufrecht erhält, sowie ein wirtschaftliches Verfahren zu deren Herstellung bereitzustellen.

Die Aufgabe der vorliegenden Erfindung wird erfindungsgemäß durch eine Scheibenanordnung mit kratzfester Beschichtung, die IR-Strahlung absorbiert, sowie ein wirtschaftliches Verfahren zu deren Herstellung gemäß den unabhängigen Ansprüchen 1, 13 und 15 gelöst. Bevorzugte Ausführungen gehen aus den Unteransprüchen hervor.

Die erfindungsgemäße Scheibenanordnung mit Beschichtung umfasst mindestens ein transparentes Substrat, eine Grundierung auf mindestens einem Teilbereich des Substrats, sowie einen Kratzfestlack auf der Oberfläche der Grundierung. Der Kratzfestlack, auch als Hardcoat oder Topcoat bezeichnet, deckt bevorzugt die gesamte Oberfläche der Grundierung ab. Die Beschichtung stellt ein Mehrschichtsystem umfassend die Grundierung als erste Schicht und den Kratzfestlack als zweite Schicht dar. Die Grundierung (auch: Primer) hat dabei die Aufgabe eine hinreichende Haftung zwischen Kratzfestlack und transparentem Substrat zu vermitteln. Die Grundierung umfasst mindestens zwei unterschiedliche IR-Absorber, die in Form von dispergierten Nanopartikeln in diese eingebracht sind. Ein erster IR-Absorber ist dabei ein Hexaborid der allgemeinen Formel XB₆, wobei X der Gruppe aus Yttrium (X=Y), Strontium (X=Sr), Lanthan (X=La), Cer (X=Ce), Praseodym (X=Pr), Neodym (X=Nd), Samarium (X=Sm), Europium (X=Eu), Gadolinium (X=Gd), Terbium (X=Tb), Dysprosium (X=Dy), Holmium (X=Ho), Erbium (X=Er), Thulium (X=Tm), Ytterbium (X=Yb) und Lutetium (X=Lu) entstammt. Als zweiter IR-Absorber in der Grundierung wird Indiumzinnoxid oder Antimonzinnoxid eingesetzt. Die Grundierung enthält des Weiteren mindestens einen ersten UV-Absorber, während mindestens ein zweiter UV-Absorber im Kratzfestlack enthalten ist.

Als erster IR-Absorber wird bevorzugt Lanthanhexaborid verwendet. Lanthanhexaborid absorbiert IR-Strahlung in einem Wellenlängenbereich von ca. 750 nm bis 1250 nm, wobei der verbleibende Anteil transmittierter Strahlung von verschiedenen Faktoren wie der Partikelgröße abhängt. Je kleiner die Partikelgröße der gewünschten Nanopartikel, desto aufwändiger erweist sich jedoch deren Herstellung. Die Verwendung von zu großen Partikelgrößen ist allerdings nicht empfehlenswert, da mit der Größe auch die Lichtstreuung der Partikel zunimmt. Die in einer bevorzugten Ausführungsform verwendete durchschnittliche Partikelgröße der Lanthanhexaboridnanopartikel liegt zwischen 5 nm und 200 nm, bevorzugt zwischen 10 nm und 150 nm, besonders bevorzugt zwischen 10 nm und 80 nm. Dabei kann eine beliebige Größenverteilung der Nanopartikel vorliegen, bevorzugt liegt die Größenverteilung jedoch in Form einer Gaußschen Verteilungskurve vor.

In einer bevorzugten Ausführungsform ist mindestens ein dritter IR-Absorber im Kratzfestlack enthalten. Der dritte IR-Absorber ist besonders bevorzugt Antimonzinnoxid oder Lanthanhexaborid, die eine höhere UV-Stabilität aufweisen als Indiumzinnoxid. Die Zusammensetzungen und Partikelgrößen des dritten IR-Absorbers liegen im Rahmen der für den ersten IR-Absorber und den zweiten IR-Absorber angegebenen Wertebereiche, wobei diese nicht zwangsläufig die gleichen Werte annehmen müssen.

Als zweiter IR-Absorber kann sowohl Indiumzinnoxid als auch Antimonzinnoxid eingesetzt werden. Indiumzinnoxid und Antimonzinnoxid absorbieren beide IR-Strahlung im Bereich von 1700 nm bis 2500 nm. Der zweite und der dritte IR-Absorber können, müssen jedoch nicht, aus der gleichen Substanz bestehen. Für den Einsatz in der erfindungsgemäßen Beschichtung sind vor allem Mischoxide mit einem Anteil von 85 % bis 95 % Indium(III)oxid und 5 % bis 15 % Zinn(IV)oxid oder einem Anteil von 5 % bis 15 % Antimon(V)oxid und 85 % bis 95 % Zinn(IV)oxid geeignet. Besonders bevorzugt sind die Mischoxide (In₂O₃)_{0.9} (SnO₂)_{0.1}, (In₂O₃)_{0.95} (SnO₂)_{0.05}, (Sb₂O₅)_{0.1} (SnO₂)_{0.9}. Die durchschnittlichen Partikelgrößen des Indiumzinnoxids und des Antimonzinnoxids liegen zwischen 5 nm und 200 nm, bevorzugt zwischen 10 nm und 150 nm, besonders bevorzugt zwischen 10 nm und 80 nm. Ganz besonders bevorzugt zeigt die Größenverteilung der Nanopartikel dabei die Form einer Gaußschen Verteilungskurve, es können jedoch auch Mischungen mit einer beliebigen Partikelverteilung eingesetzt werden. Aus Kostengründen wird bevorzugt Antimonzinnoxid eingesetzt.

In einer weiteren Ausführungsform der Erfindung können mehrere verschiedene IR-Absorber, bevorzugt jedoch nicht mehr als fünf IR-Absorber, in der Beschichtung aus Grundierung und Kratzfestlack enthalten sein. Die Auswahl und Kombination der IR-Absorber erfolgt so, dass sich die Absorptionsspektren der Substanzen in vorteilhafter Weise ergänzen und sich insgesamt eine möglichst weitreichende Absorption im gesamten Wellenlängenbereich zwischen 750 nm und 2500 nm ergibt. Gleichzeitig sollten die verwendeten IR-Absorber eine möglichst geringe Absorption im Bereich des sichtbaren Lichts von 380 nm bis 780 nm zeigen.

Eine Trübung der Scheibenanordnung durch Mischung unterschiedlicher IR-Absorber in der Grundierung wird dabei vermieden, indem die IR-Absorber mittels Ultraschall-Dispergierung in das Lackmaterial eindispergiert werden. Die erfindungsgemäße Scheibenanordnung mit infrarotdämpfender Beschichtung zeigt eine Trübung von kleiner 5 %, bevorzugt kleiner 4%, bezogen auf ein beidseitig beschichtetes Substrat. Die Trübung der Scheibe wurde dabei mittels eines HunterLab UltraScan Pro der Firma HunterAssociates Laboratory Inc. nach ASTM D1003 bestimmt. Durch Einbringen der IR-Absorber in die Grundierung können beliebige Substrate verwendet werden, auch solche deren Materialzusammensetzung nicht mit den gängigen IR-Absorbern kompatibel ist. Dies ermöglicht eine wesentlich weitere Spannbreite an Materialien. Der Einsatz von organischen Absorbern in der Polymermasse wirkt sich ferner negativ auf die Festigkeit des Materials aus. Diese Problematik wird durch den erfindungsgemäßen Einsatz von anorganischen IR-Absorbern in der Grundierung vollständig umgangen.

Die Grundierung enthält 0,5 Gew.-% bis 20 Gew.-%, bevorzugt 1 Gew.-% bis 10 Gew.-%, besonders bevorzugt 3 Gew.-% bis 7 Gew.-% des ersten IR-Absorbers und 1 Gew.-% bis 30 Gew.-%, bevorzugt 5 Gew.-% bis 20 Gew.-%, besonders bevorzugt 10 Gew.-% bis 15 Gew.-% des zweiten IR-Absorbers, jeweils bezogen auf den Gesamtfeststoffgehalt der Grundierung im lösungsmittelfreien Zustand nach dem Trocknen.

Eventuell zugesetzte weitere Absorber haben einen Anteil von maximal 30 Gew.-%, wobei die Gesamtmenge der IR-Absorber in der Grundierung einen Wert von 70 Gew.-% bezogen auf die lösungsmittelfreie Grundierung nicht überschreitet.

Die Grundierung enthält des Weiteren mindestens einen ersten UV-Absorber, bevorzugt aus der Gruppe aus Triazin-Derivaten, Phenyltriazin-Derivaten, Triazol-Derivaten, Benzotriazol-Derivaten, Malonate, Oxamide, silylierte Benzophenon-Derivate, Dibenzoylresorcin-Derivate, Diarylcyanoacrylaten, Oxalanilide, Aluminiumoxid, Ceroxid, Zirkonoxid, Zinkoxid, Titanoxid und Eisenoxiden. Geeignete UV-Absorber sind dem Fachmann hinlänglich bekannt und beispielsweise in Kapitel 2.3 des "Plastics Additives Handbook 6th Edition" (Hans Zweifel, Ralph D. Maier, Michael Schiller, veröffentlicht im Hanser-Verlag) nachzulesen. Besonders bevorzugt werden organische UV-Absorber, insbesondere 4-(3-Triethoxysilylpropoxy)-2-hydroxybenzophenon und/oder Dibenzoylresorcin-Derivate eingesetzt. Der in der Grundierung eingesetzte erste UV-Absorber ergänzt dabei den zweiten UV-Absorber des Kratzfestlacks in seiner Funktion. Nur ein Teil der UV-Strahlung trifft dabei auf den ersten UV-Absorber, da ein Teil bereits vom zweiten UV-Absorber des darüberliegenden Kratzfestlacks absorbiert wurde. In der Grundierung ergänzend zugesetzte organische UV-Absorber sind für einen Einsatz im Kratzfestlack nur eingeschränkt geeignet, da diese das Polymernetzwerk des Lacks erweichen und sich so negativ auf die Festigkeit der Lackoberfläche auswirken.

Der Kratzfestlack enthält einen Anteil von 0,1 Gew.-% bis 5 Gew.-%, bevorzugt 0,5 Gew.-% bis 2,5 Gew.-%, an UV-Absorbern bezogen auf den Gesamtfeststoffgehalt des Kratzfestlacks. Es ist mindestens ein zweiter UV-Absorber im Kratzfestlack enthalten, sowie optional weitere unterschiedliche UV-Absorber. Der erfindungsgemäße Einsatz des zweiten UV-Absorbers im Kratzfestlack ermöglicht es einen Teil der UV-Strahlung bereits vor dem Auftreffen auf die Grundierung herauszufiltern. Die in der Grundierung enthaltenen IR-Absorber sind somit teilweise vor dem durch UV-Strahlung initiierten Zerfall geschützt. Die erfindungsgemäße synergetische Kombination eines UV-absorbierenden Kratzfestlacks mit einer IR-Absorber enthaltenden Grundierung führt zu einer wesentlich höheren Alterungsbeständigkeit der Scheibe.

Der zweite UV-Absorber stammt bevorzugt aus der Gruppe enthaltend Triazin-Derivate, Phenyltriazin-Derivate, Triazol-Derivate, Benzotriazol-Derivate, Malonate, Oxamide, silylierte Benzophenon-Derivate, Dibenzoylresorcin-Derivate, Diarylcyanoacrylate, Oxalanilide, Aluminiumoxid, Ceroxid, Zirkonoxid, Zinkoxid, Titanoxid und Eisenoxide. Besonders bevorzugt wird ein anorganischer UV-Absorber oder anorganisch modifizierter UV-Absorber mit organischem Grundgerüst als zweiter UV-Absorber verwendet, da rein organische UV-Absorber das polymere Netzwerk des Kratzfestlacks schädigen. Neben den genannten anorganischen Verbindungen sind weitere anorganische UV-Absorber sowie anorganisch modifizierte UV-Absorber mit organischem Grundgerüst dem Fachmann geläufig und beispielsweise in "Plastics Additives Handbook 6th Edition" (Hans Zweifel, Ralph D. Maier, Michael Schiller, veröffentlicht im Hanser-Verlag) nachzulesen. Über den zweiten UV-Absorber hinausgehend dem Kratzfestlack zugesetzte weitere UV-Absorber können auch rein organischer Natur sein, wobei deren Konzentration so gewählt wird, dass keine oder nur eine unwesentliche Beeinträchtigung des Polymernetzwerks des Kratzfestlacks eintritt. In einer besonders bevorzugten Ausführungsform ist neben dem zweiten UV-Absorber ein dritter UV-Absorber mit rein organischer Struktur enthalten.

Des Weiteren kann der Kratzfestlack optional einen dritten IR-Absorber enthalten, der in einem Gewichtsanteil von 0 Gew.-% bis 20 Gew.-%, bevorzugt 0 Gew.-% bis 10 Gew.-% und besonders bevorzugt 1 Gew.-% bis 5 Gew.-% bezogen auf den Gesamtfeststoffgehalt des Kratzfestlacks vorliegt. Eventuell vorhandene weitere IR-Absorber und der dritte IR-Absorber überschreiten in Summe nicht einen Gesamtgewichtsanteil von 30 Gew.-%.

Die Grundierung wird mit einer Dicke von 1 µm bis 10 µm, bevorzugt 2 µm bis 4 µm, auf das transparente Substrat aufgetragen. Der Kratzfestlack wird mit einer Dicke von 3 µm bis 15 µm, bevorzugt 4 µm bis 10 µm, auf die Grundierung aufgetragen. Die Dicken der einzelnen Schichten werden dabei im trockenen Zustand nach Fixierung des Lacks gemessen. Die Gesamtdicke aller Schichten beträgt maximal 20 µm um Unregelmäßigkeiten und Risse in der Beschichtung zu vermeiden.

Das transparente Substrat enthält bevorzugt mindestens einen transparenten thermoplastischen Kunststoff, bevorzugt Polycarbonate, Polymethylmethacrylat, Polyurethane, Polyester, Polyethylenterephthalat, Polybutylenterephthalat, Polyethylennaphthalat, Polyethylen, Polypropylen, Polystyrol, Polyetheretherketon, Polyvinylchlorid, Acrylnitril-Butadien-Styrol, Polyamide und/oder Polylactat und/oder Gemische oder Copolymere davon, besonders bevorzugt Polycarbonate oder Polymethylmethacrylat, insbesondere Polycarbonat.

Das transparente Substrat kann die verschiedensten geometrischen Formen annehmen und je nach Anwendungsgebiet planar oder gebogen sein. Besonders für die Anwendung im Automobilbereich werden mehr oder minder stark gebogene Verscheibungen benötigt, wobei die Biegung nicht gleichmäßig sein muss, sondern besonders im Randbereich der Verscheibung eine stärkere Biegung vorliegen kann.

Optional kann das transparente Substrat von einem opaken Rahmen im äußeren Randbereich der Verscheibung umgeben sein, der auch einteilig mit dem Substrat ausgeformt sein kann. Dieser opake Randbereich der Scheibe kaschiert den beim Einbau der Verscheibung in diesem Bereich aufgebrachten Klebestrang vorteilhaft. Der opake Rahmen kann beispielsweise aus einer mittels Pigmenten opak getönten Polymermasse bestehen, die in einem Mehrkomponenten-Spritzgussverfahren direkt an das transparente Substrat angeformt wird.

Je nach Einsatzbereich kann auch eine Tönung der Verscheibung wünschenswert sein. Zu diesem Zweck können bereits während des Extrusionsvorgangs Pigmente in die noch formbare Polymermasse des transparenten Substrats eingearbeitet werden. Alternativ ist auch die Verwendung von getönten Lacken möglich, wobei die Pigmente in die Grundierung und/oder in den Kratzfestlack eingebracht werden. Geeignete Pigmente sind dem Fachmann geläufig.

Das transparente Substrat enthält optional einen IR-Absorber, bevorzugt Lanthanhexaborid, Indiumzinnoxid und/oder Antimonzinnoxid und/oder Gemische davon, besonders bevorzugt Lanthanhexaborid.

Die Grundierung umfasst des Weiteren mindestens ein Lösungsmittel, bevorzugt 1-Methoxy-2-Propanol, Methyl-Isobutylketon, 4-Hydroxy-4-methyl-2-pentanon und/oder Gemische oder Derivate davon. Ferner enthält die Grundierung Polyacrylate, Polyurethane, Epoxy-Harze, Melamin-Harze, Alkyd-Harze und/oder Gemische davon, bevorzugt Polyacrylate. Zusätzlich können der Grundierung Haftvermittler, Stabilisatoren, UV-Absorber und/oder Fließmittel zugesetzt sein. Als Thermostabilisatoren werden beispielsweise Phosphine, bevorzugt Triphenylphosphin, eingesetzt.

Als Kratzfestlack wird bevorzugt ein Polysiloxan-basierter Lack verwendet, besonders bevorzugt handelt es sich dabei um organisch modifizierte Silikonharze. Alternativ wäre auch der Einsatz von Epoxy- oder Acryl-basierten Lacksystemen denkbar. Der Kratzfestlack enthält ferner Lösemittel, bevorzugt Wasser, Alkohole, besonders bevorzugt Methanol, 2-Propanol, n-Butanol, 1-Methoxy-2-propanol und/oder Gemische oder Derivate davon. Zur Erhöhung der Kratzfestigkeit des Decklacks werden kolloidale Nanopartikel, wie beispielsweise SiO₂, ZrO₂ und/oder TiO₂, bevorzugt SiO₂ in die Beschichtung eingebracht, wodurch die mechanische Stabilität und die Abriebfestigkeit der Beschichtung vorteilhaft verbessert werden. Derartige Nanopartikel können bei Einsatz geeigneter Partikelgrößen auch als UV-Absorber fungieren. Des Weiteren ist in einer bevorzugten Ausführungsform mindestens ein dritter IR-Absorber, bevorzugt Antimonzinnoxid oder Lanthanhexaborid, enthalten. Der Kratzfestlack ist ferner mit UV-Absorbern ausgestattet. Derartige Verbindungen zeigen starke Absorptionsbanden im Wellenlängenbereich von 1 nm bis 380 nm des elektromagnetischen Spektrums. Dadurch werden ein durch UV-Strahlung initiierter Kettenabbau der Polymerstruktur sowie die Zersetzung anderer Materialbestandteile wie beispielsweise der IR-Absorber, vermieden. Besonders Indiumzinnoxid zeigt starke Zersetzung unter Einwirkung von UV-Strahlung. Wenn auf einer Indiumzinnoxid enthaltenden Grundierung ein Kratzfestlack aufgebracht wird, der UV-Strahlung erfolgreich abschirmt, kann die Zersetzungsreaktion des Indiumzinnoxids verlangsamt werden und so die Haltbarkeit der erfindungsgemäßen Scheibenanordnung entscheidend verlängert werden.

Die in der Grundierung und im Kratzfestlack verwendeten Additive wie IR-Absorber, UV-Absorber und die verschiedensten Hilfsstoffe werden bevorzugt durch Dispersion in einem Lösungsmittel in die Lackformulierung eingebracht. Als Lösungsmittel werden dabei bevorzugt Alkohole, Ether oder Ketone, besonders bevorzugt Methanol, 2-Propanol, n-Butanol, 4-Hydroxy-4-methyl-2-pentanon, Methyl-Isobutylketon, 1-Methoxy-2-propanol, und/oder Gemische oder Derivate davon eingesetzt, insbesondere 1-Methoxy-2-propanol. 1-Methoxy-2-propanol muss dabei nicht isomerenrein eingesetzt werden, es genügt ein technisches Gemisch aus ca. 95% bis 99% 1-Methoxy-2-propanol und 1% bis 5% 2-Methoxy-1-propanol.

Zur besseren Dispergierung der einzelnen Komponenten miteinander können dem Fachmann geläufige Dispergiermittel, beispielsweise handelsübliche Dispergiermittel auf Polyacrylatbasis eingesetzt werden. Eine hinreichend gute Dispersion ist allerdings auch mit rein mechanischen Verfahren erhältlich.

In einer besonders bevorzugten Ausführungsform der erfindungsgemäßen Scheibenanordnung enthält die Grundierung eine Kombination der IR-Absorber Lanthanhexaborid und Indiumzinnoxid sowie Dibenzoylresorcin-Derivate als ersten UV-Absorber und der Kratzfestlack umfasst Antimonzinnoxid als weiteren IR-Absorber sowie Titandioxid als zweiten UV-Absorber. Aufgrund der Zersetzungsempfindlichkeit der IR-Absorber müssen diese bestmöglich gegen UV-Strahlung geschützt werden. Die erfindungsgemäße Scheibenanordnung beinhaltet zu diesem Zweck einen UV-absorbierenden Kratzfestlack direkt oberhalb der Grundierung, so dass UV-Strahlung bereits vor dem Auftreffen auf die IR-Absorber der Grundierung gedämpft wird und die Zersetzung dieser IR-Absorber somit gehemmt ist. Dadurch kann die Alterungsbeständigkeit der erfindungsgemäßen Scheibenanordnung entscheidend erhöht werden. Um die infrarotdämpfenden Eigenschaften der Scheibe weiter zu verbessern wird auch in den Kratzfestlack ein IR-Absorber eingebracht um bereits einen Teil der Strahlung herauszufiltern. Die Kombination der infrarotdämpfenden Beschichtung mit einem an sich bekannten Mehrschichtsystem aus Grundierung und Kratzfestschicht ermöglicht ferner einen weiteren Produktionsschritt zum Aufbringen einer IR-dämpfenden Beschichtung einzusparen. Des Weiteren ist der Einsatz der erfindungsgemäßen Beschichtung auf unmodifiziertem Polycarbonat wesentlich kostengünstiger als die Verwendung IR-absorbierender Polycarbonatsubstrate.

Kommerziell erhältliche Lacksysteme, die bei der Herstellung der erfindungsgemäßen Scheibenanordnung zu Grunde gelegt werden können sind beispielsweise die Kratzfestlacke AS4700 und AS4000 von Momentive Performance Materials in Kombination mit den Grundierungen SHP470, SHP470FT-2050 und SHP401 der gleichen Firma, wobei sich die Anwendung der Grundierungen SHP470 und SHP470FT-2050 in Kombination mit dem Kratzfestlack AS4700 als besonders geeignet erwiesen hat. Eine geeignete Dispersion enthaltend 21,5 Gew.-% Lanthanhexaborid ist unter dem Handelsnamen KHSD-06 von Sumitomo Metal & Mining zu beziehen. Indiumzinnoxid ist als Dispersion enthaltend 42 Gew.-% (In₂O₃)_{0.9} (SnO₂)_{0.1} mit einer Partikelgröße von 45 nm unter dem Handelsnamen TRB SH7080 von Advanced Nano Products (ANP) erhältlich. Antimonzinnoxid kann als Dispersion mit 42 Gew.-% (Sb₂O₅)_{0.1} (SnO₂)_{0.9} enthaltend Nanopartikel mit einer durchschnittlichen Größe von 45 nm unter dem Handelsnamen TRB SR6070 von Advanced Nano Products (ANP) bezogen werden.

Die erfindungsgemäße Scheibenanordnung mit infrarotdämpfender Beschichtung ist vorzugsweise beidseitig beschichtet, wobei der Schichtaufbau aus Grundierung und Kratzfestlack auf beiden Seiten besonders bevorzugt identisch ist.

Die Erfindung umfasst des Weiteren ein Verfahren zur Herstellung einer Scheibenanordnung mit infrarotdämpfender Beschichtung. Ein transparentes Substrat wird durch Spritzgießen oder thermisches Umformen bereitgestellt und nachfolgend in mehren Schritten mit einer Beschichtung ausgestattet. Optional kann das transparente Substrat einen opaken Randbereich besitzen, der entweder im Spritzgussverfahren in Form einer opaken Polymerkomponente aufgebracht werden kann oder vor dem Umformen eines Polymerrohlings als Schwarzdruck auf diesen appliziert wird. In einem ersten Verfahrensschritt wird das transparente Substrat mit einer Grundierung ausgestattet, die mindestens einen ersten IR-Absorber und einen zweiten IR-Absorber enthält. Die Grundierung wird mittels Flutbeschichtung, Sprühbeschichtung oder Tauchbeschichtung oder mit Hilfe von Auftragswalzen auf die Oberfläche des transparenten Substrats appliziert. Bevorzugt wird das Verfahren der Flutbeschichtung verwendet. Die Grundierung kann anschließend fixiert werden, bevorzugt mittels Temperaturbehandlung, besonders bevorzugt durch Erwärmen auf 100 °C bis 150 °C für 40 Minuten bis 60 Minuten, insbesondere auf 125 °C für 50 Minuten. Ob eine Fixierung erforderlich ist hängt im Einzelnen von dem verwendeten Lacksystem ab. Im nachfolgenden Verfahrensschritt wird der Kratzfestlack enthaltend mindestens einen UV-Absorber auf die Oberfläche der Grundierung aufgetragen. Die Grundierung wirkt dabei haftvermittelnd. Der Kratzfestlack wird ebenfalls mittels Flutbeschichtung, Sprühbeschichtung oder Tauchbeschichtung oder mit Hilfe von Auftragswalzen appliziert, wobei bevorzugt das Verfahren der Flutbeschichtung angewandt wird. Der Kratzfestlack wird abschließend fixiert, bevorzugt mittels einer Temperaturbehandlung, besonders bevorzugt durch eine Erwärmung auf 100 °C bis 150 °C für 60 Minuten bis 100 Minuten, insbesondere bei 130 °C für 80 Minuten.

Die IR-Absorber und UV-Absorber, sowie mögliche Additive wie Zirkoniumdioxid, Stabilisatoren, Dispergiermittel, Pigmente und/oder andere Hilfsstoffe werden in einer möglichen Ausführungsform des erfindungsgemäßen Verfahrens zunächst mit einem Lösungsmittel dispergiert und erst danach in die Lackformulierung eingebracht. Dadurch wird eine optimale Verteilung der Additive in der Lack- oder Polymerzusammensetzung gewährleistet und die Agglomeration der Additive verhindert. Anschließend wird eine definierte Menge des Lösungsmittels enthaltend diese Additive in die Lackformulierungen der Grundierung und des Kratzfestlacks sowie optional in die Polymermasse des transparenten Substrats eingebracht und dispergiert.

Ferner umfasst die Erfindung die Verwendung einer Scheibenanordnung mit infrarotdämpfender Beschichtung in Kraftfahrzeugen, Seefahrzeugen, Flugzeugen, als Gebäudeverscheibung oder Architekturverscheibung. Bevorzugt wird die Scheibenanordnung in Kraftfahrzeugen, besonders bevorzugt als Dachverscheibung in Kraftfahrzeugen, zum Beispiel als Sonnendach eingesetzt.

Im Folgenden wird die Erfindung anhand einer Zeichnung näher erläutert. Die Zeichnung schränkt die Erfindung in keiner Weise ein.

Es zeigen:
Figur 1 eine erste Ausführungsform einer Scheibenanordnung mit erfindungsgemäßer infrarotdämpfender Beschichtung.
Figur 2 eine weitere Ausführungsform einer Scheibenanordnung mit erfindungsgemäßer infrarotdämpfender Beschichtung.
Figur 3 ein Fließdiagramm des Verfahrens zur Herstellung einer Scheibenanordnung mit infrarotdämpfender Beschichtung.

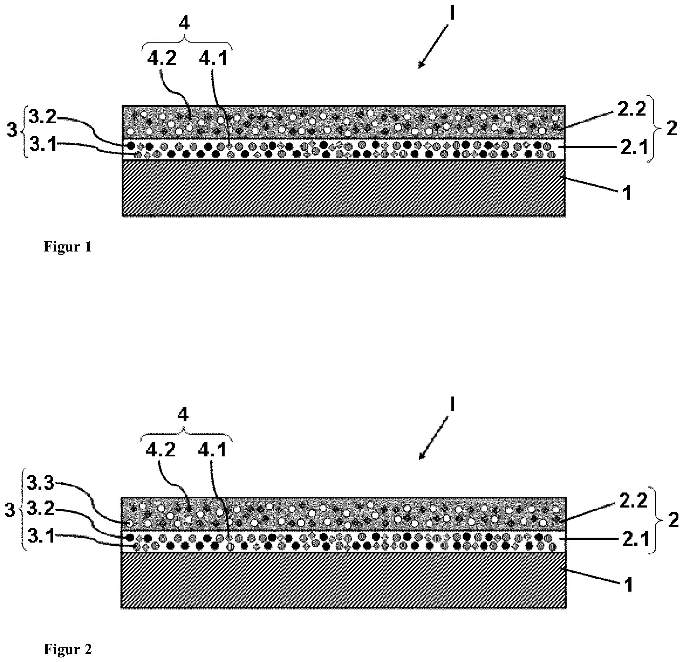

Figur 1 zeigt eine Scheibenanordnung (I) mit infrarotdämpfender Beschichtung (2), wobei auf ein transparentes Substrat (1) eine Grundierung (2.1) aufgebracht ist und auf der Grundierung (2.1) ein Kratzfestlack (2.2) appliziert ist. Die Beschichtung (2) setzt sich somit aus einem Mehrschichtsystem zusammen in dem die Grundierung (2.1) haftvermittelnd für den Kratzfestlack (2.2) wirkt. Die Grundierung (2.1) enthält zwei IR-Absorber (3) in Form von dispergierten Nanopartikeln, wobei als erster IR-Absorber (3.1) Lanthanhexaborid verwendet wird und als zweiter IR-Absorber (3.2) Indiumzinnoxid eingesetzt wird. Die Grundierung (2.1) basiert dabei auf der unter dem Handelsnamen SHP-470 (Momentive Performance Materials) erhältlichen Lackformulierung, wobei pro Gramm dieser Lackformulierung 0,034 g KHDS-06 (Sumitomo Metal & Mining) enthaltend 21,5 Gew.-% LaB₆, sowie 0,024 g Indiumzinnoxidpartikel mit einer Größe von 45 nm zugesetzt sind. Indiumzinnoxid wird dabei in Form der Dispersion TRB SH7080 erhältlich bei Advanced Nano Products (ANP) eingesetzt. Ein erster UV-Absorber (4.1) ist bereits in der Lackformulierung SHP-470 enthalten und muss nicht gesondert zugesetzt werden. Der Kratzfestlack (2.2) enthält einen zweiten UV-Absorber (4.2). Der unter dem Handelsnamen AS4700 (Momentive Performance Materials) erhältliche Kratzfestlack beinhaltet bereits einen zweiten UV-Absorber (4.2). Wie die Bezeichnung "Kratzfestlack" bereits impliziert sind in derartigen Lacken und auch in der Lackformulierung AS4700 Zusätze wie SiO₂-Nanopartikel vorhanden, die die mechanische Beständigkeit und Kratzfestigkeit der Beschichtung erhöhen. Die erfindungsgemäße Scheibenanordnung (I) ermöglicht in besonders vorteilhafter Weise die Einsparung eines Prozessschrittes bei der Lackierung, da die infrarotdämpfende Beschichtung und der Kratzfestlack (2.2) kombiniert werden können. Ferner werden der in der Grundierung (2.1) eingebrachte erste IR-Absorber (3.1) und zweite IR-Absorber (3.2) durch den zweiten UV-Absorber (4.2) des Kratzfestlacks (2.2) vor UV-Strahlung geschützt, so dass die Alterungsbeständigkeit der Scheibenanordnung (I) entscheidend verbessert werden kann.

Figur 2 zeigt eine Scheibenanordnung (I) gemäß Figur 1, wobei zusätzlich zu den dort beschriebenen Komponenten ein dritter IR-Absorber (3.3) im Kratzfestlack (2.2) enthalten ist. Der unter dem Handelsnamen AS4700 (Momentive Performance Materials) erhältliche Kratzfestlack beinhaltet bereits einen zweiten UV-Absorber (4.2), so dass nur Antimonzinnoxid als dritter IR-Absorber (3.3) zugesetzt werden muss. Dabei werden pro Gramm der Lackformulierung AS4700 0,024 g Antimonzinnoxid mit einer Partikelgröße von 45 nm zugefügt. Antimonzinnoxid wird dabei in Form der Dispersion TRB SR6070 erhältlich bei Advanced Nano Products (ANP) verwendet.

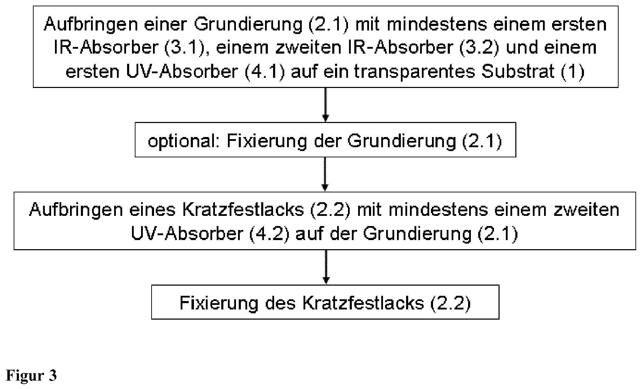

Figur 3 zeigt ein Fließdiagramm des erfindungsgemäßen Verfahrens zur Herstellung einer Scheibenanordnung (I) mit infrarotdämpfender Beschichtung. In einem ersten Schritt wird eine Grundierung (2.1) mit mindestens einem ersten IR-Absorber (3.1), einem zweiten IR-Absorber (3.2) und einem ersten UV-Absorber (4.1) auf die Oberfläche eines transparenten Substrats (1) aufgebracht. Optional kann die Grundierung (2.1) in einem nachfolgenden Schritt fixiert werden, vorzugsweise mittels einer Temperaturbehandlung. Dabei werden in der Grundierung (2.1) enthaltene Lösungsmittel entfernt. Auf die fixierte Grundierung (2.1) wird daraufhin ein Kratzfestlack (2.2) mit mindestens einem zweiten UV-Absorber (4.2) aufgetragen. Abschließend erfolgt die Fixierung des Kratzfestlacks (2.2), bevorzugt mit Hilfe einer Temperaturbehandlung. Durch das Einbringen der IR-Absorber (3) direkt in die Grundierung (2.1) des Lacksystems entfällt das Aufbringen einer infrarotdämpfenden Beschichtung als zusätzlicher Schicht.

### Bezugszeichenliste

- I: Scheibenanordnung
- 1: transparentes Substrat
- 2: Beschichtung
- 2.1: Grundierung
- 2.2: Kratzfestlack
- 3: IR-Absorber
- 3.1: erster IR-Absorber
- 3.2: zweiter IR-Absorber
- 3.3: dritter IR-Absorber
- 4: UV-Absorber
- 4.1: erster UV-Absorber
- 4.2: zweiter UV-Absorber

## Patentansprüche

1. Scheibenanordnung (I) mit Beschichtung (2) mindestens umfassend
- ein transparentes Substrat (1),
- eine Grundierung (2.1) auf mindestens einem Teilbereich des Substrats (1) enthaltend mindestens einen ersten UV-Absorber (4.1) sowie mindestens zwei IR-Absorber (3.1, 3.2) in Form von dispergierten Nanopartikeln und
- einen Kratzfestlack (2.2) auf der Oberfläche der Grundierung (2.1) enthaltend mindestens einen zweiten UV-Absorber (4.2),
wobei der erste IR-Absorber (3.1) ein Hexaborid der allgemeinen Formel XB₆ ist und X = Y, Sr, La, Ce, Pr, Nd, Sm, Eu, Gd, Tb, Dy, Ho, Er, Tm, Yb oder Lu ist und
der zweite IR-Absorber (3.2) Indiumzinnoxid oder Antimonzinnoxid ist.

2. Scheibenanordnung (I) nach Anspruch 1, wobei zwei oder mehr IR-Absorber (3) in der Beschichtung (2) enthalten sind.

3. Scheibenanordnung (I) nach Anspruch 1 oder 2, wobei der erste IR-Absorber (3.1) Lanthanhexaborid ist.

4. Scheibenanordnung (I) nach Anspruch 3, wobei der erste IR-Absorber (3.1) Lanthanhexaborid mit einer durchschnittlichen Partikelgröße von 5 nm bis 200 nm, bevorzugt 10 nm bis 150 nm, besonders bevorzugt 10 nm bis 80 nm, ist.

5. Scheibenanordnung (I) nach einem der Ansprüche 1 bis 4, wobei der zweite IR-Absorber (3.2) Antimonzinnoxid ist.

6. Scheibenanordnung (I) nach einem der Ansprüche 1 bis 4, wobei der zweite IR-Absorber (3.2) Indiumzinnoxid ist.

7. Scheibenanordnung (I) nach Anspruch 5 oder 6, wobei der zweite IR-Absorber (3.2) eine durchschnittliche Partikelgröße von 5 nm bis 200 nm, bevorzugt 10 nm bis 150 nm, besonders bevorzugt 10 nm bis 80 nm, hat.

8. Scheibenanordnung (I) nach einem der Ansprüche 1 bis 7, wobei der erste UV-Absorber (4.1) ein organischer UV-Absorber, bevorzugt aus der Gruppe aus Triazin-Derivaten, Phenyltriazin-Derivaten, Triazol-Derivaten, Benzotriazol-Derivaten, Malonaten, Oxamiden, silylierte Benzophenon-Derivaten, Dibenzoylresorcin-Derivaten, Diarylcyanoacrylaten und Oxalaniliden ist.

9. Scheibenanordnung (I) nach einem der Ansprüche 1 bis 8, wobei der zweite UV-Absorber (4.2) ein anorganischer UV-Absorber oder ein anorganisch modifizierter UV-Absorber mit organischem Grundgerüst ist.

10. Scheibenanordnung (I) nach einem der Ansprüche 1 bis 9, wobei der Kratzfestlack (2.2) einen dritten IR-Absorber (3.3), bevorzugt Antimonzinnoxid oder Lanthanhexaborid, enthält.

11. Scheibenanordnung (I) nach einem der Ansprüche 1 bis 10, wobei der Kratzfestlack (2.2) Siloxane und/oder Siliziumdioxid-Nanopartikel enthält.

12. Scheibenanordnung (I) nach einem der Ansprüche 1 bis 11, wobei die Grundierung (2.1) Polyacrylate, Polyurethane, Epoxy-Harze, Melamin-Harze, Alkyd-Harze und/oder Gemische davon enthält.

13. Verfahren zur Herstellung einer Scheibenanordnung (I) nach einer der Ansprüche 1 bis 12 wobei
a) eine Grundierung (2.1) enthaltend mindestens einen ersten IR-Absorber (3.1), einen zweiten IR-Absorber (3.2), und einen ersten UV-Absorber (4.1) auf ein transparentes Substrat (1) aufgebracht wird,
b) ein Kratzfestlack (2.2) mit mindestens einem zweiten UV-Absorber (4.2) auf der Grundierung (2.1) aufgebracht wird,
c) der Kratzfestlack (2.2) fixiert wird.

14. Verfahren nach Anspruch 13, wobei die Fixierung des Kratzfestlacks (2.2) mittels einer Temperaturbehandlung erfolgt.

15. Verwendung einer Scheibenanordnung (I) nach einer der Ansprüche 1 bis 12 in Kraftfahrzeugen, Seefahrzeugen, Flugzeugen, als Gebäudeverscheibung oder Architekturverscheibung, bevorzugt als Scheibenanordnung (I) in Kraftfahrzeugen, besonders bevorzugt als Dachverscheibung in Kraftfahrzeugen.

## Claims

1. Pane arrangement (I) with coating (2) comprising at least
- a transparent substrate (1),
- a primer (2.1) on at least one subregion of the substrate (1), said primer containing at least one first UV absorber (4.1) as well as at least two IR absorbers (3.1, 3.2) in the form of dispersed nanoparticles, and
- a scratchproof coat (2.2) on the surface of the primer (2.1), said scratchproof coat containing at least one second UV absorber (4.2),
wherein the first IR absorber (3.1) is a hexaboride of the general formula XB₆ and X = Y, Sr, La, Ce, Pr, Nd, Sm, Eu, Gd, Tb, Dy, Ho, Er, Tm, Yb, or Lu, and
the second IR absorber (3.2) is indium tin oxide or antimony tin oxide.

2. Pane arrangement (I) according to claim 1, wherein two or more IR absorbers (3) are contained in the coating (2).

3. Pane arrangement (I) according to claim 1 or 2, wherein the first IR absorber (3.1) is lanthanum hexaboride.

4. Pane arrangement (I) according to claim 3, wherein the first IR absorber (3.1) is lanthanum hexaboride with an average particle size from 5 nm to 200 nm, preferably 10 nm to 150 nm, particularly preferably 10 nm to 80 nm.

5. Pane arrangement (I) according to one of claims 1 through 4, wherein the second IR absorber (3.2) is antimony tin oxide.

6. Pane arrangement (I) according to one of claims 1 through 4, wherein the second IR absorber (3.2) is indium tin oxide.

7. Pane arrangement (I) according to claim 5 or 6, wherein the second IR absorber (3.2) has an average particle size from 5 nm to 200 nm, preferably 10 nm to 150 nm, particularly preferably 10 nm to 80 nm.

8. Pane arrangement (I) according to one of claims 1 through 7, wherein the first UV absorber (4.1) is an organic UV absorber, preferably from the group of triazine derivatives, phenyltriazine derivatives, triazole derivatives, benzotriazole derivatives, malonates, oxamides, silylated benzophenone derivatives, dibenzoyl resorcinol derivatives, diaryl cyanoacrylates, and oxalanilides.

9. Pane arrangement (I) according to one of claims 1 through 8, wherein the second UV absorber (4.2) is an inorganic UV absorber or an inorganically modified UV absorber with an organic skeleton.

10. Pane arrangement (I) according to one of claims 1 through 9, wherein the scratchproof coat (2.2) contains a third IR absorber (3.3), preferably antimony tin oxide or lanthanum hexaboride.

11. Pane arrangement (I) according to one of claims 1 through 10, wherein the scratchproof coat (2.2) contains siloxanes and/or silicon dioxide nanoparticles.

12. Pane arrangement (I) according to one of claims 1 through 11, wherein the primer (2.1) contains polyacrylates, polyurethanes, epoxy resins, melamine resins, alkyd resins, and/or mixtures thereof.

13. Method for producing a pane arrangement (I) according to one of claims 1 through 12, wherein
a) a primer (2.1) containing at least one first IR absorber (3.1), one second IR absorber (3.2), and one first UV absorber (4.1) is applied on a transparent substrate (1),
b) a scratchproof coat (2.2) with at least one second UV absorber (4.2) is applied on the primer (2.1),
c) the scratchproof coat (2.2) is fixed.

14. Method according to claim 13, wherein the fixing of the scratchproof coat (2.2) is done by means of a temperature treatment.

15. Use of a pane arrangement (I) according to one of claims 1 through 12 in motor vehicles, marine vessels, aircraft, as building glazing or architectural glazing, preferably as a pane arrangement (I) in motor vehicles, particularly preferably as a roof glazing in motor vehicles.

## Revendications

1. Arrangement de vitres (I) avec revêtement (2) qui comprend au moins
- un substrat transparent (1),
- un apprêt (2.1) au moins une zone partielle du substrat (1) contenant au moins un premier absorbeur d'UV (4.1) ainsi qu'au moins deux absorbeur d'IR (3.1, 3.2) sous forme de nanoparticules dispersées et
- un vernis résistant aux rayures (2.2) sur la surface de l'apprêt (2.1) contenant au moins un deuxième absorbeur d'UV (4.2),
où le premier absorbeur d'IR (3.1) est une héxaborure du formule général XB₆ et X = Y, Sr, La, Ce, Pr, Nd, Sm, Eu, Gd, Tb, Dy, Ho, Er, Tm, Yb ou Lu et le deuxième absorbeur d'IR (3.2) est de l'oxyde d'étain-indium ou de l'oxyde d'étain-antimoine.

2. Arrangement de vitres (I) selon la revendication 1, où deux absorbeurs d'IR (3) ou plus sont compris dans le revêtement (2).

3. Arrangement de vitres (I) selon la revendication 1 ou 2, où le premier absorbeur d'IR (3.1) est de l'héxaborure de lanthane.

4. Arrangement de vitres (I) selon la revendication 3, où le premier absorbeur d'IR (3.1) est de l'héxaborure de lanthane avec une taille de particules moyenne de 5 nm à 200 nm, de préférence de 10 mn à 150 mn, de façon particulièrement préférée de 10 nm à 80 nm.

5. Arrangement de vitres (I) selon l'une des revendications 1 à 4, où le deuxième absorbeur d'IR (3.2) est de l'oxyde d'étain-antimoine.

6. Arrangement de vitres (I) selon l'une des revendications 1 à 4, où le deuxième absorbeur d'IR est de l'oxyde d'étain-indium (3.2).

7. Arrangement de vitres (I) selon la revendication 5 ou 6, où le deuxième absorbeur d'IR (3.2) a une taille de particules moyenne de 5 nm à 200 nm, de préférence de 10 mn à 150 mn, de façon particulièrement préférée de 10 nm à 80 nm.

8. Arrangement de vitres (I) selon l'une des revendications 1 à 7, où le premier absorbeur d'UV (4.1) est un absorbeur d'UV organique, de préférence sélectionné dans le groupe des dérivés de la triazine, des dérivés de la phényltriazine, des dérivés de triazole, des dérivés de benzotriazole, des malonates, des oxamides, des dérivés de benzophénone silylaté, des dérivés de dibenzoylresorcinol, des diarylecyanoacrylates et des oxalanilides.

9. Arrangement de vitres (I) selon l'une des revendications 1 à 8, où le deuxième absorbeur d'UV (4.2) est un absorbeur d'UV inorganique ou un absorbeur d'UV inorganique modifié avec structure de base organique.

10. Arrangement de vitres (I) selon l'une des revendications 1 à 9, où le vernis résistant aux rayures (2.2) contient un troisième absorbeur d'IR (3.3), de préférence de l'oxyde d'étain-antimoine ou de l'héxaborure de lanthane.

11. Arrangement de vitres (I) selon l'une des revendications 1 à 10, où le vernis résistant aux rayures (2.2) contient des siloxanes et/ou des nanoparticules de dioxyde de silicium.

12. Arrangement de vitres (I) selon l'une des revendications 1 à 11, où le apprêt contient (2.1) des polyacrylates, des polyuréthanes, des résines époxy, des résines de mélamine, des résines alkydes et/ou des mélanges de ceux-ci.

13. Procédé de fabrication d'une arrangement de vitres (I) selon l'une des revendications 1 à 12, où
a) un apprêt (2.1) contenant au moins un premier absorbeur d'IR (3.1), un second absorbeur d'IR (3.2) et un premier absorbeur d'UV (4.1) est appliqué sur un substrat transparent (1),
b) un vernis résistant aux rayures (2.2) avec au moins un deuxième absorbeur d'UV (4.2) est appliqué sur l'apprêt (2.1),
c) le vernis résistant aux rayures (2.2) est fixé.

14. Procédure selon la revendication 13, où le vernis résistant aux rayures (2.2) est fixé au moyen d'un traitement thermique.

15. Utilisation d'une arrangement de vitres (I) selon l'une des revendications 1 à 12 dans les véhicules automobiles, les navires, les aéronefs, comme vitrage dans le bâtiment ou pour l'architecture, de préférence comme configuration de vitres (I) dans les véhicules automobiles, de façon particulièrement préférée comme vitrage du toit dans les véhicules automobiles.
